# EUROPEAN PATENT SPECIFICATION

(11) **EP 4 079 547 B1**
(45) Date of publication and mention of the grant of the patent: **06.03.2024**
(21) Application number: 22168739.5
(22) Date of filing: 19.04.2022
(51) Int. Cl.: B60G 15/06, F16H 7/04, H02K 7/06

(54) **PULLEY ASSEMBLY FOR RAISING AND LOWERING THE HEIGHT OF A VEHICLE**
SEILZUGANORDNUNG ZUM ANHEBEN UND ABSENKEN DER HÖHE EINES FAHRZEUGS
ENSEMBLE POULIE PERMETTANT D'AUGMENTER ET DE RÉDUIRE LA HAUTEUR D'UN VÉHICULE

(30) Priority: 20.04.2021 US 202117235861; 25.01.2022 CN 202210084912
(43) Date of publication of application: 26.10.2022
(73) Proprietor: BeijingWest Industries Co. Ltd., 102400 Beijing (CN)
(72) Inventor: ROSE, Iain, Luton Beds, Bedfordshire LU27LZ (GB); CHEVALLEREAU, Baptiste, 75001 Paris (FR); MARCHAND, Jocelyn, 92300 Levallois Perret (FR); HERDA, Philippe, 95700 Tremblay (FR)
(74) Representative: Lukaszyk, Szymon

(56) References cited:
- DE-A1-102014 226 063
- US-A1- 2020 144 891

## Description

### Field of the Invention

The present invention generally relates to a pulley assembly for raising and lowering the height of a vehicle.

### Description of the Prior Art

It is oftentimes beneficial to adjust the height of a vehicle body. For example, by raising the vehicle body to an extended position or lowering the vehicle body to a constricted position, the ground and roof clearance can be modified permitting travel in conditions that would not otherwise be possible or advisable. Devices that facilitate this adjustment are traditionally provided in or around suspension struts of motor vehicles. Typically, such devices include a lift housing disposed on a center axis defining a chamber. A support tube is disposed in the chamber with the lift housing being movable along the center axis relative to the support tube. The movement of the lift housing is oftentimes driven using a hydraulic actuator. While these hydraulic actuators provide the functionality as described above, there are certain drawbacks and inefficiencies. For example, if the lift housing needs to be held in the extended position for a prolonged period, a constant hydraulic pressure is required increasing susceptibility to internal leakage. Another popular technology oftentimes used to adjust the height of the vehicle body are ballscrew mechanisms or solenoid activated mechanisms, e.g. a pneumatic suspension. However, the solenoid activated mechanisms require electric power input for the locking/unlocking of the solenoid valve which is slow in response time and requires a high energy consumption.

Accordingly, there is a continuing desire to improve upon the operational framework and efficiency of devices that adjust the height of a vehicle body.

Document DE102014226063A1 discloses a pulley assembly according to the preamble of claim 1 and describes a device for height adjustment of a vehicle bodywork. The invention concerns a device for height adjustment of a motor vehicle structure containing linear components between the vehicle structure and a wheel against each other by means of an adjustment device. In order to make the adjustment device simple and cost-effective, the adjustment device is composed of a recirculating medium drive consisting of a housing fixed linearly to a component, two pulleys fixed in the housing which can be rotated by at least one electric motor in the same direction of rotation and a linear roller replaceable in the housing, linearly coupled to the second component, where between a first drive roller and a linear drive roll, the adjustment device is made up of a retractable drive drive of a housing fixed linearly to a component, which is fixed in the housing by at least one electric motor in the same direction of rotation.

Document US 2020/144891 A1 discloses a pulley assembly according to the preamble of claim 1 and describes a linear actuator for motion simulator. A linear actuator is configured to be connected between a platform and a structure or ground for displacement of the platform relative to the structure or the ground. The actuator comprises a base, and an output displaceable linearly relative to the base. A first plurality of idlers are on the base, and a second plurality of idlers are on the output. An actuator unit has a reciprocating rotational output. A tensioning member has a first end connected to the rotational output of the actuator unit, and a second end connected to an anchor point on one of the output and the base, the tensioning member being routed from the rotational output, through the first plurality of idlers and the second plurality of idlers and to the anchor point for converting a winding/unwinding of the tensioning member into a translation of the output.

### Summary of the invention

The foregoing has outlined rather broadly the features and technical advantages of the present invention in order that the detailed description of the invention that follows may be better understood.

The invention provides for a pulley assembly that efficiently raises and lowers the height of a vehicle body thereby improving upon the operational framework and efficiency of traditional devices that have been used to adjust the height of a vehicle body. Further, the present invention provides for a pulley assembly that has a simple design and a low cost in production.

It is one aspect of the present invention to provide a pulley assembly for raising and lowering an associated vehicle body. The pulley assembly comprises a housing including an outer sleeve extending along an axis. At least one top pulley wheel is operably connected to the outer sleeve and at least one bottom pulley wheel is operably connected to the outer sleeve and moveable relative to the at least one top pulley wheel along the axis. A cable is weaved between the at least one top pulley wheel and the at least one bottom pulley wheel. An actuator is operably connected to the cable to reel-in the cable and draw the at least one top pulley wheel relative to and towards the at least one bottom pulley wheel along the axis to lower the associated vehicle body. The actuator further reels-out the cable to permit the at least one top pulley wheel to move relative to and away from the at least one bottom pulley wheel to raise the associated vehicle body. The at least one top pulley wheel is connected to an upper mounting ring and said at least one bottom pulley wheel is connected to a lower mounting ring, wherein one of said upper mounting ring and said lower mounting ring is slidably connected to said outer sleeve and said other of said upper mounting ring and said lower mounting ring is statically connected to said outer sleeve.

It is another aspect of the present invention to provide a pulley assembly for raising and lowering an associated vehicle body. The pulley assembly comprises a housing including an outer sleeve extending along an axis. A dampening mechanism is located within the outer sleeve. An upper mounting ring and a lower mounting ring are operably connected to the outer sleeve, wherein the upper mounting ring is moveable relative to the lower mounting ring along the axis. A plurality of top pulley wheels are operably connected to the upper mounting ring and a plurality of bottom pulley wheel are operably connected to the lower mounting ring. A cable is weaved between the plurality of top pulley wheels and the plurality of bottom pulley wheels.

A spool assembly is operably connected to the cable to reel-in the cable and draw the upper mounting ring relative to and towards the lower mounting ring along the axis to lower the associated vehicle body and to reel-out the cable to permit the upper mounting ring to move relative to and away from the lower mounting ring to raise the associated vehicle body.

Further areas of applicability will become apparent from the description provided herein. The description and specific examples in this summary are intended for purposes of illustration only and are not intended to limit the scope of the present disclosure.

### Brief description of the Figures

Other advantages of the present invention will be readily appreciated, as the same becomes better understood by reference to the following detailed description when considered in connection with the accompanying drawings wherein:
Fig. 1 is a side view of a pulley assembly for raising and lowering the height of a vehicle in accordance with principles of the present disclosure; and
Fig. 2 is a perspective and partially sectioned view of the pulley assembly.

### Description of the enabling embodiment

Example embodiments will now be described more fully with reference to the accompanying drawings. In general, the subject embodiments are directed to a pulley assembly for raising and lowering the height of a vehicle. However, the example embodiments are only provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments,
well-known processes, well-known device structures, and well-known technologies are not described in detail.

Referring to the Figures, wherein like numerals indicate corresponding parts throughout the several views, a pulley assembly is provided for raising and lowering the height of the vehicle. The pulley assembly improves upon the operational framework and efficiency of traditional devices that have been used to adjust the height of a vehicle body.

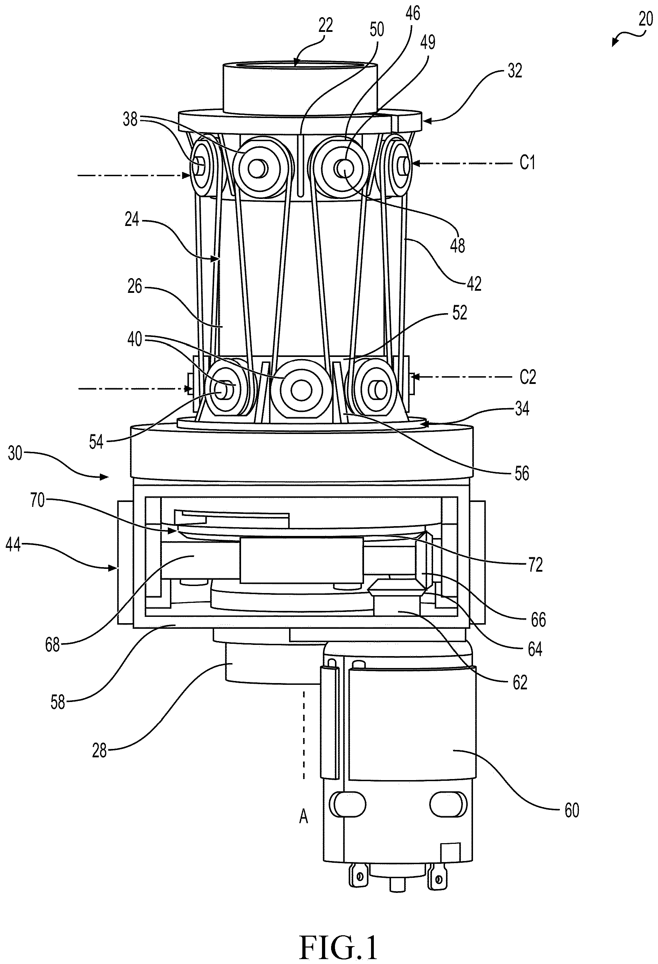

Referring initially to Fig. 1, the pulley assembly 20 is constructed in accordance with principles of the present invention. In some embodiments, the pulley assembly 20 may be incorporated with a dampening mechanism 22. For example, the dampening mechanism 22 may be a twin tube, magnetorheological fluid, hydraulic, pneumatic, coil spring, other configurations, or combinations thereof. The pulley assembly 20 includes a housing 24 including an outer portion (outer sleeve 26) and an inner portion (inner sleeve 28) disposed within the outer sleeve 26. The outer sleeve 26 and inner sleeve 28 extend along an axis A and the outer sleeve 26 and inner sleeve 28 may be moveable relative to one another along the axis A. The pulley assembly 20 includes an upper mounting ring 32 and a lower mounting ring 34. In some embodiments, the upper mounting ring 32 is axially connected to the outer sleeve 26 for conjoint axial movement therewith and the lower mounting ring 34 is slidably connected to the outer sleeve 26 to permit the outer sleeve 26 and upper mounting ring 32 to move axially relative to the lower mounting ring 34. In some embodiments, the inner sleeve 28 is a dampening tube or is otherwise operably connected (e.g., via the upper mounting ring 32) to a dampening tube of the dampening mechanism 22 such that relative movement between the upper mounting ring 32 and the lower mounting ring 34 results in expansion or contraction of the dampening mechanism 22 along the axis A thereby raising and lowering the vehicle body (not shown). Thus, in some embodiments, the upper mounting ring 32 is connected to the inner sleeve 28 and the lower mounting ring is connected to outer sleeve 26 such that relative movement therebetween results in equal movement between the outer sleeve 26 and the inner sleeve 28 raising and lowering the vehicle body.

With continued reference to Fig. 1, the pulley actuator 30 further includes at least one top pulley wheel 38 operably and rotatably connected to the outer sleeve 26, the inner sleeve 28, the upper mounting ring 32, or a combination thereof. At least one bottom pulley wheel 40 operably and rotatably connects to the outer sleeve 26, the inner sleeve 28, the lower mounting ring 34, a stationary component of the vehicle, or a combination thereof. A cable 42 is weaved through the at least one top pulley wheel 38 and the at least one bottom pulley wheel 40 such that tension on the cable 42 causes the upper mounting ring 32 and the lower mounting ring 34 to move relative to and towards one another along the axis A, thereby contracting the dampening assembly 22. In some embodiments, the cable 42 is formed of steel, for example, a strand steel of 1.2 to 2mm gauge. As will be described in greater detail below, a powered actuator 44 is operably connected to the cable 42 for tensioning and releasing the cable 42.

The at least one top pulley wheel 38 may include a plurality of top pulley wheels 38 and the at least one bottom pulley wheel 40 may include a plurality of bottom pulley wheels 40. In some embodiments, the plurality of top pulley wheels 38 includes three or more, four or more, five or more, six or more, seven or more, or eight or more. In some embodiments, the plurality of bottom pulley wheels 40 includes three or more, four or more, five or more, six or more, seven or more, or eight or more. In some embodiments, the number of top pulley wheels 38 and bottom pulley wheels are equal. The plurality of top pulley wheels 38 are disposed circumferentially about the axis A along a first circumference C1 and the plurality of bottom pulley wheels 40 are disposed circumferentially about the axis A along a second circumference C2. In some embodiments, the first circumference C1 is equal in size to the second circumference C2. In some embodiments, the plurality of top pulley wheels 38 are disposed equidistantly about the first circumference C1 and the plurality of bottom pulley wheels 40 are disposed equidistantly about the second circumference C2. In some embodiments, the plurality of top pulley wheels 38 are circumferentially misaligned with the plurality of bottom pulley wheels 40, for example, each of the top pulley wheels 38 may be circumferentially aligned with a central location between adjacent bottom pulley wheels 40. Each pulley 38, 40 may include a groove 44 having a u-shaped cross-section for retaining the cable 42. When assembled, the cable 42 may be threaded clockwise or counter clockwise around the axis A such that it operably connects from one of the top pulley wheels 38 and extends down and operably connects to a circumferentially adjacent bottom pulley wheel 40 wherein it extends up to operably connect to a circumferentially adjacent top pulley wheel 38 wherein the threaded pattern continues.

Each of the top pulley wheels 38 may be connected to a top pulley ring 46 with an upper bearing pin 48. In some embodiments, each top pulley wheel 38 rotationally connects to the upper bearing pin 48 with a circlip 49. The top pulley ring 46 is located directly under the upper mounting ring 32 and may be integral therewith or a separate component. A top fin 50 is located centrally between each adjacent top pulley wheel 38 to provide structural support and may also assist in maintaining the cable 42 in position such that it cannot be removed without deweaving. Each of the bottom pulley wheels 40 may be connected to a bottom pulley ring 52 with a lower bearing pin 54. In some embodiments, each bottom pulley wheel 40 rotationally connects to the lower bearing pin 54 with a circlip 49. The bottom pulley ring 52 is located directly over the lower mounting ring 30 and may be integral therewith or a separate component. A bottom fin 56 is located centrally between each adjacent bottom pulley wheel 40 to provide structural support and may also assist in maintaining the cable 42 in position such that it cannot be removed without deweaving. Thus, in some embodiments, each top pulley wheel 38 may be circumferentially aligned with a bottom fin 56 and each bottom pulley wheel 40 may be circumferentially aligned with a top fin 50. Each of the top fins 50 and each of the bottom fins 56 may taper towards the axis A as they extend axially towards each other.

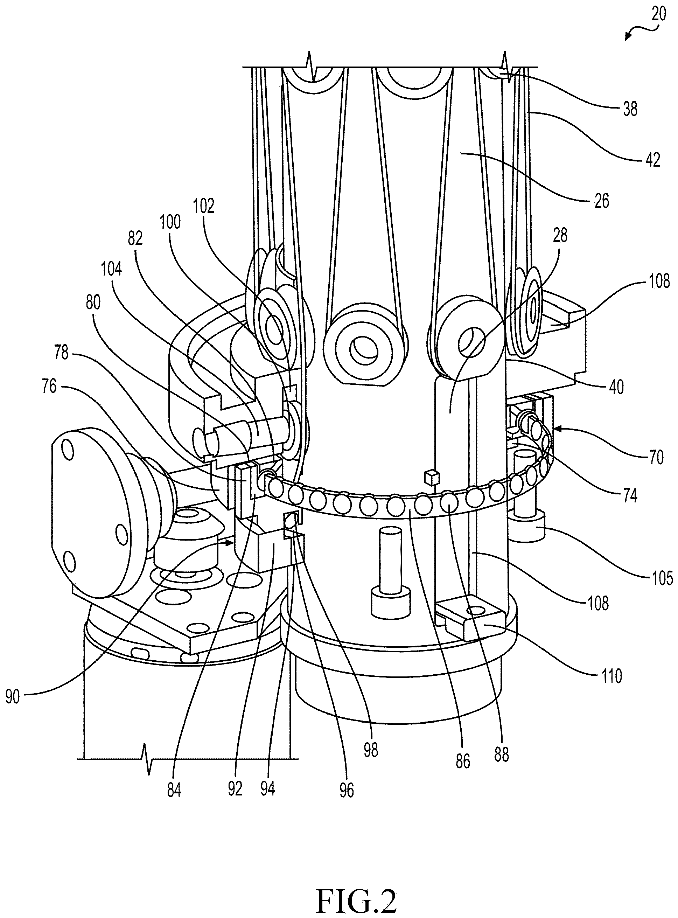

As best illustrated in Fig. 1 and Fig. 2, at least portions of the powered actuator 44 are located within an actuator housing 58. The actuator housing 58 may be integral with, directly coupled to, or indirectly coupled to the lower mounting ring 34. The powered actuator 44 includes a motor 60 having a motor shaft 62 extending into the actuator housing 58. The motor 60 may be an electric motor. A first bevel gear 64 couples to the motor shaft 62. A second bevel gear 66 is located in the actuator housing 58 and is in mesh engagement with the first bevel gear 64. A worm screw 68 is also disposed in the actuator housing 58 and couples to the second bevel gear 66 for conjoint rotation therewith. The worm screw 68 is supported on opposite ends by a pair of bearing supports 68 coupled to the actuator housing 58.

As best illustrated in Fig. 2, the powered actuator 44 includes a spool assembly 70 operably connected to the worm gear 66 such that rotation of the worm gear 66 causes movement of the spool assembly 70. Movement of the spool assembly 70 may either reel-in the cable 42 and move the plurality of top pulley wheels 38 towards the plurality of bottom pulley wheels 40 or reel-out the cable 42 to permit the plurality of top pulley wheels 38 to move away from the plurality of bottom pulley wheels 40. The spool assembly 70 includes a worm wheel 72 in meshed engagement with the worm screw 68, such that rotation of the worm screw 68 causes clockwise or counterclockwise rotation of the worm wheel 72. The worm wheel 72 defines a spool channel 74, an outer wall of which is connected to one end of the cable 42 and such that rotation of which causes the cable 42 to travel therewith between the reeling-in condition wherein the cable 42 spools in the spool channel 74 and the reeling-out condition wherein the cable despools from the spool channel 74. In some embodiments, the powered actuator 44 and spool assembly 70 may be configured as a traditional winch.

With continued reference to Fig. 2, the spool assembly 70 is located under the lower mounting ring 34. The lower mounting ring 34 includes a top flange 76 projecting downwardly defining an upper annular opening for locating at least a portion of the spool assembly 70. The spool assembly 70 includes a bottom flange 78 projecting upwardly towards the lower mounting ring 34 and seated within the upper annular opening at least in a reeled-in condition. When assembled, the upper annular opening and the lower annular opening define a bearing retaining opening 80 having an annular shape. A lower bearing race 82 is located within the lower annular opening portion and an upper bearing race 84 is located in the upper annular opening portion. A bearing ring 86 is located between the lower bearing race 82 and the upper bearing race 84. The bearing ring 86 defines a plurality of bearing holding apertures with a bearing 88 located in each bearing holding aperture. In some embodiments, each bearing 88 may be a ball bearing having a generally spherical shape.

In operation, the bearing ring 86 facilitates rotational movement of the spool assembly 70 with respect to the lower mounting ring 34 and outer sleeve 26. A retention ring 90 is located under the spool assembly 70 to axially locate the spool assembly 70 next to the lower mounting ring 34. The retention ring 90 may include an outer retention ring 92 and an inner retention ring 94. A bottom surface of the spool assembly 70 may define a bearing retaining channel 96 and at least one lower bearing 98 may be located in the bearing retaining channel 96 in contact with the bottom surface of the spool assembly 70 and a top surface of the retention ring 90, for example, the inner retention ring 94.

At least one winch pulley 100 is located adjacent to the spool channel 74 for directing the cable 42 into the spool channel 74. In some embodiments, the at least one winch pulley 100 is located in a winch holding cavity 102 in the lower mounting ring 34 and is rotationally supported by a winch pulley pin 104. The lower mounting ring 34 may be at least partially supported on the outer sleeve 26 by one or more fasteners 105.

A top surface of the lower mounting ring 34 defines a spring seat groove 106 for locating a helical spring (not shown) that biases the lower mounting ring 34 away from the upper mounting ring 32. In some embodiments, the helical spring may be a suspension coil spring. The lower mounting ring 34 may further define a cable receiving aperture (see Fig. 2) adjacent to the winch holding cavity 102 that permits the cable 42 to extend therethrough to the spool assembly 70. While one end of the cable 42 is attached to the spool assembly 70 an opposite end of the cable 42 may also be attached/anchored to the spool assembly 70, the upper mounting ring 32, the lower mounting ring 34, one of the pulley wheels 38, 40, or another component. The outer sleeve 26 defines an anti-rotation channel 108 extending parallel to the axis A and the inner sleeve 28 includes an anti-rotation tab 110 projecting out of the anti-rotation channel 108. In operation, the anti-rotation tab 110 is guided within the anti-rotation channel 108 to facilitate axial movement and prevent relative rotation between the outer sleeve 26 and the inner sleeve 28. In some embodiments, the lower mounting ring 34 is connected to the anti-rotation tab 110 and the upper mounting ring 32 is connected to the outer sleeve 26 such that relative movement therebetween results in equal movement between the outer sleeve 26 and the inner sleeve 28.

In operation, as the cable 42 is reeled-in by the actuator 44, the upper mounting ring 32 and the lower mounting ring 34 are caused to move relative to and towards one another, compressing the spring, and lowering the vehicle body. As the cable 42 is reeled-out by the actuator 44, the upper mounting ring 32, and the lower mounting ring 34 are caused to move relative to and away from one another via expansion of the spring and/or dampening mechanism 22 to raise the vehicle body.

In some embodiments, the spool assembly 70 may be biased towards the reel-in position, such that any absorption/compression of the dampening mechanism 22 permits non-tensioned portions of the cable 42 to be reeled-in without directly causing raising and lowering of the vehicle body. A pulley assembly 20 as described herein with 8 top and 8 bottom pulley wheels has been shown to lift a vehicle corner weight (for example 7000N for a large SUV) by applying only 7000 / 15 = 467 N tension on the cable 42, which is within the capability of a 1.2mm to 2mm gauge stranded steel cable. The requirements of the motor 60 is approximately 350 Joules in 3 seconds at an average of approximately 120 Watts. Thus in some embodiments, the motor 60 may be at least a 120 Watt motor. In some embodiments, the motor 60 may be larger, for example, 300 Watts to account for efficiency loss throughout service life. In some embodiments, the spool assembly 70 defines a spool channel 74 that is configured to rotate approximately four turns in three seconds for moving the cable 42 between a completely reeled-in position and a completely reeled-out position.

Obviously, many modifications and variations of the present invention are possible in light of the above teachings and may be practiced otherwise than as specifically described while within the scope of the appended claims.

The term "relative" movement between a first part and a second part may mean that only the first part moves, the second part moves, or both the first part and the second part move with respect to one another.

## Claims

1. A pulley assembly (20) for raising and lowering an associated vehicle body, said pulley assembly (20) comprising:
a housing (24) including an outer sleeve (26) extending along an axis (A);
at least one top pulley wheel (38) operably connected to said outer sleeve (26);
at least one bottom pulley wheel (40) operably connected to said outer sleeve (26) and moveable relative to said at least one top pulley wheel (38) along said axis (A);
a cable (42) weaved between said at least one top pulley wheel (38) and said at least one bottom pulley wheel (40); and
an actuator (44) operably connected to said cable (42) to reel-in said cable (42) and draw said at least one top pulley wheel (38) relative to and towards said at least one bottom pulley wheel (40) along said axis (A) to lower said associated vehicle body and to reel-out said cable (42) to permit said at least one top pulley (38) wheel to move relative to and away from said at least one bottom pulley wheel (40) to raise said associated vehicle body,
**characterized in that** said at least one top pulley wheel (38) is connected to an upper mounting ring (32) and said at least one bottom pulley wheel (40) is connected to a lower mounting ring (34), wherein one of said upper mounting ring (32) and said lower mounting ring (34) is slidably connected to said outer sleeve (26) and said other of said upper mounting ring (32) and said lower mounting ring (34) is statically connected to said outer sleeve (26).

2. Said pulley assembly (20) as set forth in claim 1, wherein a spring biases said at least one top pulley wheel (38) away from said at least one bottom pulley wheel (40) along said axis (A).

3. Said pulley assembly (20) as set forth in claim 1 or 2, wherein said at least one top pulley wheel (38) includes a plurality of top pulley wheels (38) disposed around said axis (A) along a first circumference.

4. Said pulley assembly (20) as set forth in claim 3, wherein said at least one bottom pulley wheel (40) includes a plurality of bottom pulley wheels (40) disposed around said axis (A) along a second circumference, preferably wherein said plurality of top pulley wheels (38) includes eight top pulley wheels (38) and said plurality of bottom pulley wheels (40) includes eight bottom pulley wheels (40).

5. Said pulley assembly (20) as set forth in claim 4, wherein said first circumference and said second circumference are equal in size.

6. Said pulley assembly (20) as set forth in claim 5, wherein said plurality of top pulley wheels (38) are circumferentially misaligned with said plurality of bottom pulley wheels (40) such that each of said top pulley wheels (38) are circumferentially aligned with a location centered between circumferentially adjacent bottom pulley wheels (40).

7. Said pulley assembly (20) as set forth in any one of claims 4 to 6, wherein a top fin (50) is located between each circumferentially adjacent top pulley wheels (38) and wherein a bottom fin (56) is located between each circumferentially adjacent bottom pulley wheels (40).

8. Said pulley assembly (20) as set forth in any one of claims 1 to 7, wherein said at least one top pulley wheel (38) and said at least one bottom pulley wheel (40) each define a groove (44) for seating said cable (42) therein.

9. Said pulley assembly (20) as set forth in any one of claims 1 to 8, wherein said actuator (44) includes a motor (60) and a spool assembly (70) driven by said motor (60) to reel-in and collect portions of said cable (42).

10. Said pulley assembly (20) as set forth in claim 9, wherein said spool assembly (70) is located under said at least one bottom pulley wheel (40) opposite said at least one top pulley wheel (38).

11. Said pulley assembly (20) as set forth in claim 9 or 10, wherein said spool assembly (70) includes a worm wheel (72) and said motor (60) drives a motor shaft (62) that causes rotation of said worm wheel (72).

12. Said pulley assembly (20) as set forth in claim 1, wherein said pulley assembly (20) comprising:
a dampening mechanism (22) located within said outer sleeve (26);
wherein said upper mounting ring (32) is moveable relative to said lower mounting ring (34) along said axis (A);
wherein said at least one top pulley wheel (38) includes a plurality of top pulley wheels (38) operably connected to said upper mounting ring (32);
wherein said at least one bottom pulley wheel (40) includes a plurality of bottom pulley wheel (40) operably connected to said lower mounting ring (34);
said cable (42) weaved between said plurality of top pulley wheels (38) and said plurality of bottom pulley wheels (40); and
wherein said actuator (44) comprises a spool assembly (70) operably connected to said cable (42) to reel-in said cable (42) and draw said top mounting ring relative to and towards said lower mounting ring (34) along said axis (A) to lower said associated vehicle body and to reel-out said cable (42) to permit said upper mounting ring (32) to move relative to and away from said lower mounting ring (34) to raise said associated vehicle body.

13. Said pulley assembly (20) as set forth in claim 12, wherein said lower mounting ring (34) defines a spring seat for locating a first end of a suspension coil spring and biasing said lower mounting ring (34) away from said upper mounting ring (32), preferably wherein a cap is located adjacent to said upper mounting ring (32) for locating a second end of said suspension coil spring.

14. Said pulley assembly as set forth in claim 12 or 13, wherein said plurality of top pulley wheels (38) are located circumferentially equidistant around said upper mounting ring (32); and/or wherein said plurality of bottom pulley wheels (40) are located circumferentially equidistant around said lower mounting ring (34), preferably wherein said upper mounting ring (32) defines a top fin (50) located between each of said top pulley wheels (38) and said lower mounting ring (34) defines a bottom fin (56) located between each of said bottom pulley wheels (40), and wherein each of said top fins (50) are circumferentially aligned with one of said bottom pulley wheels (40) and each of said bottom fins (56) are circumferentially aligned with one of said top pulley wheels (38).

## Patentansprüche

1. Eine Riemenscheibenanordnung (20) zum Anheben und Absenken einer zugehörigen Fahrzeugkarosserie, wobei die Riemenscheibenanordnung (20) aus Folgendem besteht:
einem Gehäuse (24) mit einer äußeren Hülse (26), die sich entlang einer Achse (A) erstreckt;
mindestens einer oberen Riemenscheibe (38), die funktionsfähig mit der äußeren Hülse (26) verbunden ist;
mindestens einer unteren Riemenscheibe (40), die funktionell mit der äußeren Hülse (26) verbunden und relativ zu der mindestens einen oberen Riemenscheibe (38) entlang der Achse (A) beweglich ist;
einem Seil (42), das zwischen der mindestens einen oberen Riemenscheibe (38) und der mindestens einen unteren Riemenscheibe (40) verflochten ist; und
einem Aktuator (44), der betriebsmäßig mit dem Seil (42) verbunden ist, um das Seil (42) aufzurollen und die mindestens eine obere Riemenscheibe (38) relativ zu und in Richtung der mindestens einen unteren Riemenscheibe (40) entlang der Achse (A) zu ziehen, um die zugehörige Fahrzeugkarosserie abzusenken, und um das Seil (42) auszurollen, damit sich die mindestens eine obere Riemenscheibe (38) relativ zu und weg von der mindestens einen unteren Riemenscheibe (40) bewegen kann, um die zugehörige Fahrzeugkarosserie anzuheben,
**dadurch gekennzeichnet, dass** die mindestens eine obere Riemenscheibe (38) mit einem oberen Befestigungsring (32) verbunden ist und die mindestens eine untere Riemenscheibe (40) mit einem unteren Befestigungsring (34) verbunden ist, wobei entweder der obere Befestigungsring (32) oder der untere Befestigungsring (34) verschiebbar mit der äußeren Hülse (26) verbunden ist und der andere des oberen Befestigungsrings (32) und des unteren Befestigungsrings (34) statisch mit der äußeren Hülse (26) verbunden ist.

2. Die Riemenscheibenanordnung (20) nach Anspruch 1, wobei eine Feder die mindestens eine obere Riemenscheibe (38) von der mindestens einen unteren Riemenscheibe (40) entlang der Achse (A) weg vorspannt.

3. Die Riemenscheibenanordnung (20) nach Anspruch 1 oder 2, wobei die mindestens eine obere Riemenscheibe (38) eine Vielzahl von oberen Riemenscheiben (38) umfasst, die um die Achse (A) entlang eines ersten Umfangs angeordnet sind.

4. Die Riemenscheibenanordnung (20) nach Anspruch 3, wobei die mindestens eine untere Riemenscheibe (40) eine Vielzahl von unteren Riemenscheiben (40) umfasst, die um die Achse (A) entlang eines zweiten Umfangs angeordnet sind, wobei vorzugsweise die Vielzahl von oberen Riemenscheiben (38) acht obere Riemenscheiben (38) umfasst und die Vielzahl von unteren Riemenscheiben (40) acht untere Riemenscheiben (40) umfasst.

5. Die Riemenscheibenanordnung (20) nach Anspruch 4, wobei der erste Umfang und der zweite Umfang gleich groß sind.

6. Die Riemenscheibenanordnung (20) nach Anspruch 5, wobei die mehreren oberen Riemenscheiben (38) in Umfangsrichtung nicht mit den mehreren unteren Riemenscheiben (40) ausgerichtet sind, so dass jede der oberen Riemenscheiben (38) in Umfangsrichtung mit einer Stelle ausgerichtet ist, die zwischen in Umfangsrichtung benachbarten unteren Riemenscheiben (40) zentriert ist.

7. Die Riemenscheibenanordnung (20) nach einem der Ansprüche 4 bis 6, wobei eine obere Rippe (50) zwischen jeder in Umfangsrichtung benachbarten oberen Riemenscheiben (38) angeordnet ist und wobei eine untere Rippe (56) zwischen jeder in Umfangsrichtung benachbarten unteren Riemenscheiben (40) angeordnet ist.

8. Die Riemenscheibenanordnung (20) nach einem der Ansprüche 1 bis 7, wobei die mindestens eine obere Riemenscheibe (38) und die mindestens eine untere Riemenscheibe (40) jeweils eine Nut (44) zur Aufnahme des Seils (42) bilden.

9. Die Riemenscheibenanordnung (20) nach einem der Ansprüche 1 bis 8, wobei der Aktuator (44) einen Motor (60) und eine Spulenanordnung (70) umfasst, die von dem Motor (60) angetrieben wird, um Teile des Seils (42) aufzurollen und zu sammeln.

10. Die Riemenscheibenanordnung (20) nach Anspruch 9, wobei die Spulenanordnung (70) unter der mindestens einen unteren Riemenscheibe (40) gegenüber der mindestens einen oberen Riemenscheibe (38) angeordnet ist.

11. Die Riemenscheibenanordnung (20) nach Anspruch 9 oder 10, wobei die Spulenanordnung (70) ein Schneckenrad (72) aufweist und der Motor (60) eine Motorwelle (62) antreibt, die eine Drehung des Schneckenrades (72) bewirkt.

12. Die Riemenscheibenanordnung (20) nach Anspruch 1, wobei die Riemenscheibenanordnung (20) aus Folgendem besteht:
einem Dämpfungsmechanismus (22), der innerhalb der äußeren Hülse (26) angeordnet ist;
wobei der obere Befestigungsring (32) relativ zu dem unteren Befestigungsring (34) entlang der Achse (A) beweglich ist;
wobei die mindestens eine obere Riemenscheibe (38) eine Vielzahl von oberen Riemenscheiben (38) umfasst, die funktionsfähig mit dem oberen Befestigungsring (32) verbunden sind;
wobei die mindestens eine obere Riemenscheibe (40) eine Vielzahl von unteren Riemenscheiben (40) umfasst, die funktionsfähig mit dem unteren Befestigungsring (34) verbunden sind;
wobei das Seil (42) zwischen der Vielzahl von oberen Riemenscheiben (38) und der Vielzahl von unteren Riemenscheiben (40) verflochten ist; und
wobei der Aktuator (44) eine Spulenanordnung (70) umfasst, die funktionsfähig mit dem Seil (42) verbunden ist, um das Seil (42) aufzurollen und den oberen Befestigungsring relativ zu und in Richtung des unteren Befestigungsrings (34) entlang der Achse (A) zu ziehen, um die zugehörige Fahrzeugkarosserie abzusenken, und um das Seil (42) aufzurollen, damit sich der obere Befestigungsring (32) relativ zu und weg von dem unteren Befestigungsring (34) bewegen kann, um die zugehörige Fahrzeugkarosserie anzuheben.

13. Die Riemenscheibenanordnung (20) nach Anspruch 12, wobei der untere Befestigungsring (34) einen Federsitz zur Aufnahme eines ersten Endes einer Aufhängungsschraubenfeder definiert und den unteren Befestigungsring (34) von dem oberen Befestigungsring (32) weg vorspannt, wobei vorzugsweise eine Kappe neben dem oberen Befestigungsring (32) zur Aufnahme eines zweiten Endes der Aufhängungsschraubenfeder angeordnet ist.

14. Die Riemenscheibenanordnung nach Anspruch 12 oder 13, wobei die mehreren oberen Riemenscheiben (38) in gleichem Umfangsabstand um den oberen Befestigungsring (32) angeordnet sind; und/oder wobei die mehreren unteren Riemenscheiben (40) in gleichem Umfangsabstand um den unteren Befestigungsring (34) herum angeordnet sind, wobei vorzugsweise der obere Befestigungsring (32) eine obere Rippe (50) definiert, die zwischen jeder der oberen Riemenscheiben (38) angeordnet ist, und der untere Befestigungsring (34) eine untere Rippe (56) definiert, die zwischen jeder der unteren Riemenscheiben (40) angeordnet ist, und wobei jede der oberen Rippen (50) in Umfangsrichtung mit einem der unteren Riemenscheiben (40) ausgerichtet ist und jede der unteren Rippen (56) in Umfangsrichtung mit einem der oberen Riemenscheiben (38) ausgerichtet ist.

## Revendications

1. Un ensemble poulie (20) pour soulever et abaisser une carrosserie de véhicule associée, ledit ensemble poulie (20) comprenant:
un boîtier (24) comprenant un manchon extérieur (26) s'étendant le long d'un axe (A);
au moins une roue de poulie supérieure (38) reliée de manière opérationnelle audit manchon extérieur (26);
au moins une roue de poulie inférieure (40) reliée de manière opérationnelle audit manchon extérieur (26) et mobile par rapport à ladite au moins une roue de poulie supérieure (38) le long dudit axe (A);
un câble (42) tissé entre ladite au moins une roue de poulie supérieure (38) et ladite au moins une roue de poulie inférieure (40) et
un actionneur (44) relié de manière opérationnelle audit câble (42) pour enrouler ledit câble (42) et tirer ladite au moins une roue de poulie supérieure (38) par rapport à et vers ladite au moins une roue de poulie inférieure (40) le long dudit axe (A) pour abaisser ladite carrosserie de véhicule associée et pour dérouler ledit câble (42) afin de permettre à ladite au moins une roue de poulie supérieure (38) de se déplacer par rapport à et loin de ladite au moins une roue de poulie inférieure (40) pour soulever ladite carrosserie de véhicule associée,
**caractérisé en ce que** ladite au moins une roue de poulie supérieure (38) est reliée à un anneau de montage supérieur (32) et ladite au moins une roue de poulie inférieure (40) est reliée à un anneau de montage inférieur (34), l'un desdits anneaux de montage supérieurs (32) et desdits anneaux de montage inférieurs (34) étant relié de manière coulissante au manchon extérieur (26) et l'autre desdits anneaux de montage supérieurs (32) et desdits anneaux de montage inférieurs (34) étant relié de manière statique au manchon extérieur (26).

2. Ledit ensemble poulie (20) selon la revendication 1, dans lequel un ressort écarte ladite au moins une roue de poulie supérieure (38) de ladite au moins une roue de poulie inférieure (40) le long de l'axe (A).

3. Ledit ensemble poulie (20) selon les revendications 1 ou 2, dans lequel ladite au moins une roue de poulie supérieure (38) comprend une pluralité de roues de poulie supérieures (38) disposées autour dudit axe (A) le long d'une première circonférence.

4. Ledit ensemble poulie (20) selon la revendication 3, dans lequel au moins une roue de poulie inférieure (40) comprend une pluralité de roues de poulie inférieures (40) disposées autour de l'axe (A) le long d'une seconde circonférence, de préférence dans laquelle ladite pluralité de roues de poulie supérieures (38) comprend huit roues de poulie supérieures (38) et ladite pluralité de roues de poulie inférieure (40) comprend huit roues de poulie inférieures (40).

5. Ledit ensemble poulie (20) selon la revendication 4, dans lequel la première circonférence et la seconde circonférence sont de dimensions égales.

6. Ledit ensemble poulie (20) selon la revendication 5, dans lequel la pluralité de poulies supérieures (38) est désalignée sur la circonférence par rapport à la pluralité de roues de poulie inférieures (40) de sorte que chacune des roues de poulie supérieures (38) est alignée circonférentiellement avec un emplacement centré entre les roues de poulie inférieures (40) adjacentes circonférentiellement.

7. Ledit ensemble poulie (20) selon l'une des revendications de 4 à 6, dans lequel une ailette supérieure (50) est située entre chaque roue de poulie supérieure (38) adjacente circonférentiellement et dans lequel une ailette inférieure (56) est située entre chaque roue de poulie inférieure (40) adjacente circonférentiellement.

8. Ledit ensemble poulie (20) selon l'une des revendications de 1 à 7, dans lequel ladite au moins une roue de poulie supérieure (38) et ladite au moins une roue de poulie inférieure (40) définissent chacune une rainure (44) pour y loger ledit câble (42).

9. Ledit ensemble poulie (20) selon l'une des revendications de 1 à 8, dans lequel ledit actionneur (44) comprend un moteur (60) et un ensemble bobine (70) entraîné par ledit moteur (60) pour enrouler et collecter des parties dudit câble (42).

10. Ledit ensemble poulie (20) selon la revendication 9, dans lequel ledit ensemble bobine (70) est situé sous ladite au moins une roue de poulie inférieure (40) en face de ladite au moins une roue de poulie supérieure (38).

11. Ledit ensemble poulie (20) selon les revendications 9 ou 10, dans lequel ensemble bobine (70) comprend une roue à vis sans fin (72) et ledit moteur (60) entraîne un arbre moteur (62) qui provoque la rotation de ladite roue à vis sans fin (72).

12. Ledit ensemble poulie (20) selon la revendication 1, dans lequel ledit ensemble poulie (20) comprend:
un mécanisme d'amortissement (22) situé à l'intérieur dudit manchon extérieur (26);
dans lequel ledit anneau de montage supérieur (32) est mobile par rapport audit anneau de montage inférieur (34) le long dudit axe (A);
dans lequel ladite au moins une roue de poulie supérieure (38) comprend une pluralité de roues de poulie supérieures (38) reliées de manière opérationnelle audit anneau de montage supérieur (32);
dans lequel ladite au moins une roue de poulie inférieure (40) comprend une pluralité de roues de poulie inférieures (40) reliées de manière opérationnelle audit anneau de montage inférieur (34);
ledit câble (42) se tisse entre ladite pluralité de roues de poulies supérieures (38) et ladite pluralité de roues de poulies inférieures (40); et
dans lequel ledit actionneur (44) comprend un ensemble bobine (70) relié de manière opérationnelle audit câble (42) pour enrouler ledit câble (42) et tirer ledit anneau de montage supérieur par rapport à et vers ledit anneau de montage inférieur (34) le long dudit axe (A) pour abaisser ladite carrosserie de véhicule associée et pour dérouler ledit câble (42) afin de permettre audit anneau de montage supérieur (32) de se déplacer par rapport à et loin dudit anneau de montage inférieur (34) pour élever ladite carrosserie de véhicule associée.

13. Ledit ensemble poulie (20) selon la revendication 12, dans lequel l'anneau de montage inférieur (34) définit un siège de ressort pour loger une première extrémité d'un ressort hélicoïdal de suspension et écarter ledit anneau de montage inférieur (34) de l'anneau de montage supérieur (32), de préférence dans lequel un capuchon est situé à côté de l'anneau de montage supérieur (32) pour loger une seconde extrémité du ressort hélicoïdal de suspension.

14. Ledit ensemble poulie selon les revendications 12 ou 13, dans lequel ladite pluralité de roues de poulie supérieures (38) sont situées de manière équidistante autour de l'anneau de montage supérieur (32) ; et/ou dans lequel ladite pluralité de roues de poulie inférieures (40) sont situées circonférentiellement à égale distance autour dudit anneau de montage inférieur (34), de préférence dans lequel ledit anneau de montage supérieur (32) définit une ailette supérieure (50) située entre chacune desdites roues de poulie supérieures (38) et ledit anneau de montage inférieur (34) définit une ailette inférieure (56) située entre chacune desdites roues de poulie inférieures (40), et dans lequel chacune de ces ailettes supérieures (50) est alignée circonférentiellement avec l'une de ces roues de poulie inférieures (40) et chacune de ces ailettes inférieures (56) est alignée circonférentiellement avec l'une de ces roues de poulie supérieures (38).
